# EUROPEAN PATENT APPLICATION

(11) **EP 2 387 265 A1**
(43) Date of publication of application: **16.11.2011**
(21) Application number: 10360024.3
(22) Date of filing: 10.05.2010
(51) Int. Cl.: H04W 16/32, H04W 24/02, H04W 16/08, H04W 52/02

(54) **Small cell base station operating state control**

(71) Applicant: Alcatel Lucent, 75008 Paris (FR)
(72) Inventor: Boccardi, Fredrico, Swindon Wiltshire SN1 2EE (GB); Ashraf, Imran, Swindon Wiltshire SN5 5AA (GB)
(74) Representative: Leppard, Andrew John

(57) **Abstract**

A method of controlling the operating state of at least one small cell base station of a heterogeneous wireless telecommunications network, a network node and a computer program product are disclosed. The method of controlling an operating state of at least one small cell base station of a heterogeneous wireless telecommunications network, the operating state being one of a sleeping and a non-sleeping state, the at least one small cell base station providing wireless coverage, when in the non-sleeping state, within a wireless coverage area provided by another base station comprises the steps of: receiving at least one of user equipment parameters relating to operating characteristics of user equipment within the heterogeneous wireless telecommunications network and base station parameters relating to operating characteristics of base stations within the heterogeneous wireless telecommunications network; and determining from the at least one of the user equipment parameters and the base station parameters whether a change is required to the operating state of the at least one small cell base station to achieve at least one predetermined operating condition of the heterogeneous wireless telecommunications network and, if so, transmitting the change to the at least one small cell base station to cause a transition between the sleeping and non-sleeping state. Hence, only those changes in operating state of the small cell base station that are required to achieve the network operating condition are sent to the small cell base station. This prevents small cell base stations from being switched between the sleeping and non-sleeping state when there is no requirement to do so and enables a wide range of network conditions to be set.

## Description

### FIELD OF INVENTION

The present invention relates to a method of controlling the operating state of at least one small cell base station of a heterogeneous wireless telecommunications network, a network node and a computer program product.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within the macro cell. Such smaller sized cells are sometimes referred to as micro cells, femto cells and pico cells. A wireless telecommunications network comprised of different sized cells is known as a heterogeneous wireless telecommunications network. One way to establish such a small cell is to provide a small cell base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.

Small cell base stations are typically intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users.

Such small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments. Due to the relatively small radio coverage area provided by small cell base stations, the energy consumption by each small cell base station is relatively low, due to the shorter distances between the transmitter-receiver pair of the user equipment and the small cell base station.

In a typical small cell base station, a broadband Internet protocol connection is used as "back haul" for connecting to the core network. One type of broadband Internet protocol connection is a Digital Subscriber Line (DSL). The DSL connects a DSL transmitter-receiver "transceiver" of the small cell base station to the core network. The DSL allows voice calls and other services provided by the small cell base station to be supported. The small cell base station also includes a radio frequency (RF) transceiver connected to one or more antennas for wireless communications with the user equipment.

Although the deployment of such small cell base stations improves the coverage provided to user equipment, this is at the cost of needing to deploy such small cell base stations and their associated overheads. Accordingly, it is desired to provide an improved technique for controlling small cell base stations.

### SUMMARY

According to a first aspect, there is provided a method of controlling an operating state of at least one small cell base station of a heterogeneous wireless telecommunications network, the operating state being one of a sleeping and a non-sleeping state, the at least one small cell base station providing wireless coverage, when in the non-sleeping state, within a wireless coverage area provided by another base station, the method comprising the steps of: receiving at least one of user equipment parameters relating to operating characteristics of user equipment within the heterogeneous wireless telecommunications network and base station parameters relating to operating characteristics of base stations within the heterogeneous wireless telecommunications network; and determining from the at least one of the user equipment parameters and the base station parameters whether a change is required to the operating state of the at least one small cell base station to achieve at least one predetermined operating condition of the heterogeneous wireless telecommunications network and, if so, transmitting the change to the at least one small cell base station to cause a transition between the sleeping and non-sleeping state.

The first aspect recognises that although various techniques exist which cause individual or groups of small cell base stations to transition to a non-sleeping mode when user equipment may be in the vicinity of the small cell base stations, these techniques often result in small cell base stations being inappropriately switched out of the sleeping state and, therefore, unnecessarily consuming power. Also, the circumstances in which an assessment is made of whether to cause small cell base stations to transition out of the sleep mode is relatively limited. Hence, the amount of control over the activation of the small cell base stations is relatively low. The first aspect also recognises that in some circumstances, even though user equipment may benefit from a small cell base station transitioning out of the sleep mode, the benefit of making such a transition may not outweigh the overall cost to the network of doing so and the user equipment may continue to operate sufficiently well with the current wireless provision; indeed the user equipment may even continue to function adequately with reduced provision.

Accordingly, parameters relating to operating characteristics of network nodes such as, for example, user equipment or base stations, are received. These parameters may describe the operating conditions being experienced by those individual network nodes and/or may describe the resources available from those network nodes. These parameters may then utilised to determine whether a change in state of the small cell base station is required in order to achieve a particular operating condition of the network. For example, it may be deduced from these parameters that the operating condition of the network may be achieved with the small cell base station in its current operating state. Likewise, it may be determined that the operating condition of the network can still be achieved even if the small cell base station transitions from its current operating state to a different operating state. Alternatively, it may be determined that the operating condition may only be achieved when the small cell base station transitions to a different operating state. Hence, if a change in state is required, then an indication of that change may transmitted to the small cell base station. In this way, it can be seen that only those changes in operating state of the small cell base station that are required to achieve the network operating condition are sent to the small cell base station. This prevents small cell base stations from being switched between the sleeping and non-sleeping state when there is no requirement to do so and enables a wide range of network conditions to be set. Accordingly, the occurrence of small cell base stations being inappropriately switched out of the sleeping state and, therefore, unnecessarily consuming power may be reduced. Also, a wider range of circumstances in which an assessment is made of whether to cause small cell base stations to transition out of the sleep mode is achievable and the amount of control over the activation of the small cell base stations is increased. In this way, it can be seen that a centralised algorithm may be provided which determines whether or not to activate the small cell base stations. The algorithm may utilise parameters relating to the user equipment and/or parameters relating to the infrastructure of the network. Based on these parameters, the algorithm may take a decision on whether or not to wake up a small cell by evaluating an objective function describing a desired network condition to be achieved.

In one embodiment, at least one of an upper and lower threshold related to the at least one predetermined operating condition is provided and the step of determining comprises determining whether a change is required to the operating state of the at least one small cell base station to achieve the at least one of the upper and lower threshold related to the at least one predetermined operating condition. Accordingly, the predetermined operating condition may have a threshold associated therewith. The threshold may be an upper threshold and/or a lower threshold. In some circumstances, if the upper threshold is exceeded then it may be necessary to cause a transition of the small cell base station to the sleeping state. Alternatively, in other circumstances, if the upper threshold is exceeded then it may be necessary to cause the small cell base station to transition to the non-sleeping state. A similar situation may exist for the lower threshold. In each situation, the action required will depend on the context of the thresholds and the operating condition. However, by specifying thresholds, it is possible to objectively determine whether a change in state of the small cell base station is required based on the parameters received.

In one embodiment, an upper and lower threshold related to the at least one predetermined operating condition is provided and the step of determining comprises determining whether a change is required to the operating state of the at least one small cell base station to achieve the predetermined operating condition within the upper and lower threshold. Accordingly, it may be possible to specify that the operating condition of the wireless network may be required to fall within both an upper and a lower threshold. In a similar manner to that described above, the action required for changing the state of the small cell base station will depend on the context of the set thresholds.

In one embodiment, a plurality of small cell base stations is provided and the step of determining comprises determining whether a change is required to the operating state of each of the plurality of one small cell base stations to achieve the at least one predetermined operating condition of the heterogeneous wireless telecommunications network and, if so, transmitting the change to the plurality of one small cell base stations to cause a transition between the sleeping and non-sleeping state. Accordingly, an assessment may be made of whether it is necessary to cause more than one small cell base station to transition from its current operating state in order to achieve the desired operating condition. In this way, a number of small cell base stations may be controlled in concert, to ensure that the required network operating conditions are achieved.

In one embodiment, the user equipment parameters comprise at least one of user equipment speed, user equipment location, user equipment signal to interference plus noise ratio, user equipment subscription type and user equipment service. It will be appreciated that these are just examples of particular user equipment parameters and that other user equipment parameters are well known to those in the art.

In one embodiment, the base station parameters comprise at least one of base station load, base station handover parameters, base station historic operating characteristics and base station energy consumption. It will be appreciated that these are just examples of particular base station parameters and that other base station parameters are well known in to those in the art.

In one embodiment, the predetermined operating condition comprises at least one of network energy consumption, network throughput, base station activation level, mobility support level and quality of service support level. Accordingly, various desired operating conditions may be specified. These operating conditions may also be specified in combination. For example, one such operating condition may require a minimum quality of service support level in combination with a maximum energy consumption. These conditions may also be specified in terms of the whole or a part of the network. For example, the operating conditions may be specified on an overlying cell by overlying cell or other basis. That is to say, the operating conditions within each overlying cell such as, for example, each macro cell may be specified.

In one embodiment, the another base station is operable to provide an overlying cell as the wireless coverage area within which the small cell base station is operable to provide a small cell as the wireless coverage. Hence, the another base station may be, for example, a macro base station providing an overlying or underlying cell within which a small cell base station may be located. It will be appreciated that in these circumstances service provision may continue even when the small cell base station is in the sleep state, since the user equipment will continue to be supported by the underlying cell provided by the another base station.

In one embodiment, when in the sleeping state, wireless communication logic of the small cell base station is unpowered and the small cell base station is inoperable to provide the wireless coverage. Accordingly, when in the sleeping state, the small cell base station will be in a minimal power consumption mode with typically most components unpowered and only the back haul network connection remaining active in order to receive any messages from the core network requesting a change in operating state. When in this sleeping state, no wireless communication may be supported by the small cell base station.

In one embodiment, in the non-sleeping state, wireless communication logic of the small cell base station is powered and the small cell base station is operable to provide the wireless coverage. Accordingly, when in this state, the small cell base station will typically be operating normally, providing full wireless communications coverage to user equipment.

According to a second aspect, there is provided claim a network node operable to control an operating state of at least one small cell base station of a heterogeneous wireless telecommunications network, the operating state being one of a sleeping and a non-sleeping state, the at least one small cell base station providing wireless coverage, when in the non-sleeping state, within a wireless coverage area provided by another base station, the network node comprising: reception logic operable to receive at least one of user equipment parameters relating to operating characteristics of user equipment within the heterogeneous wireless telecommunications network and base station parameters relating to operating characteristics of base stations within the heterogeneous wireless telecommunications network; and determination logic operable to determine from the at least one of the user equipment parameters and the base station parameters whether a change is required to the operating state of the at least one small cell base station to achieve at least one predetermined operating condition of the heterogeneous wireless telecommunications network; and transmission logic operable, in response to an indication from the determination logic, to transmit the change to the at least one small cell base station to cause a transition between the sleeping and non-sleeping state.

In one embodiment, at least one of an upper and lower threshold related to the at least one predetermined operating condition is provided and the determination logic is operable to determine whether a change is required to the operating state of the at least one small cell base station to achieve the at least one of the upper and lower threshold related to the at least one predetermined operating condition.

In one embodiment, an upper and lower threshold related to the at least one predetermined operating condition is provided and the determination logic is operable to determine whether a change is required to the operating state of the at least one small cell base station to achieve the predetermined operating condition within the upper and lower threshold.

In one embodiment, the determination logic is operable to determine whether a change is required to the operating state of each of a plurality of one small cell base stations to achieve the at least one predetermined operating condition of the heterogeneous wireless telecommunications network and, if so, transmitting the change to the plurality of one small cell base stations to cause a transition between the sleeping and non-sleeping state.

In one embodiment, the user equipment parameters comprise at least one of user equipment speed, user equipment location, user equipment signal to interference plus noise ratio, user equipment subscription type and user equipment service.

In one embodiment, the base station parameters comprise at least one of base station load, base station handover parameters, base station historic operating characteristics and base station energy consumption.

In one embodiment, the predetermined operating condition comprises at least one of network energy consumption, network throughput, base station activation level, mobility support level and quality of service support level.

In one embodiment, the another base station is operable to provide an overlying cell as the wireless coverage area within which the small cell base station is operable to provide a small cell as the wireless coverage.

In one embodiment, when in the sleeping state, wireless communication logic of the small cell base station is unpowered and the small cell base station is inoperable to provide the wireless coverage.

In one embodiment, when in the non-sleeping state, wireless communication logic of the small cell base station is powered and the small cell base station is operable to provide the wireless coverage.

According to a third aspect, there is provided a computer program product operable when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates operating states of a small cell base station;
Figure 3 illustrates a centralised decision making algorithm;
Figure 4 is a flow chart illustrating the operation of the centralise decision making algorithm according to one embodiment; and
Figure 5 is a flow chart illustrating the operation of the centralise decision making algorithm according to another embodiment.

### DESCRIPTION OF THE EMBODIMENTS

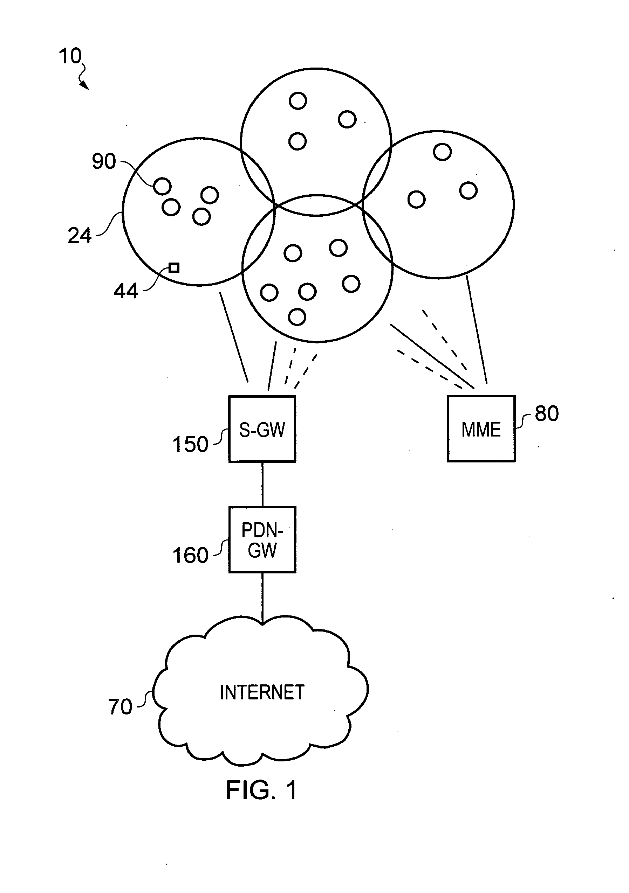

Figure 1 illustrates a wireless communication network, generally 10, according to one embodiment. User equipment 44 roam through the wireless communication network 10. Base stations are provided which support respective macro cells 24. A number of such base stations are provided, which are distributed geographically in order to provide a wide area of coverage to the user equipment 44. When user equipment 44 is within a macro cell 24 supported by the base station then communications may be established between the user equipment 44 and the base station over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by core network nodes. In this long term evolution (LTE) example, a serving gateway S-GW 150, a Packet Data Network Gateway PDN-GW 160 are coupled with the Internet 70 and provide data to and from base stations within the network. A Mobility Management Entity MME 80 provides a control path with the base stations within the network.

The MME 80 maintains a neighbour list which includes information about the geographical relationship between cells supported by base stations. In addition, the MME 80 maintains location information which provides information on the location of the user equipment within the wireless communications network 10.

Small cell base stations are provided, each of which provides a small cell 90 in the vicinity of a building within which the associated small cell base station is installed. The small cells 90 are typically provided within an overlying or underlying macro cell 24. The small cells 90 provide local communications coverage for a user in the vicinity of those buildings. A handover or camping event is initiated between a base station and a small cell base station when the user equipment provides a measurement report to the macro base station which indicates that the small cell base station is within range. The small cell base stations typically utilise the user's broadband Internet connection (such as ADSL, Cable, Ethernet, etc.) as a backhaul.

Small cell base stations are lower-power, lower-cost, and possibly user-deployed base stations that provide a high cellular quality of service in residential or enterprise environment. In contrast to current macro cell approaches where complex and highly reliable base stations are deployed to strategic locations decided by the network owner, the small cell base stations are provided locally by customers. Such small cell base stations provide local coverage in areas of the macro network where quality of service may be low. Hence, the small cell base stations provide for improved quality of service in areas which are difficult for network operators. To reduce the cost of the small cell stations and to reduce complexity and interference effects of the small cell on other user equipment within the macro cell, the transmission power of the small cell base station is relatively low in order to restrict the size of the small cell to a range of tens of metres or less. The small cell base stations have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

The small cell base stations are operational in two different modes. In the first, open access mode, a small cell base station allows access to all the users of the operator's network. In the second, a closed access mode, only registered users are able to access the small cell.

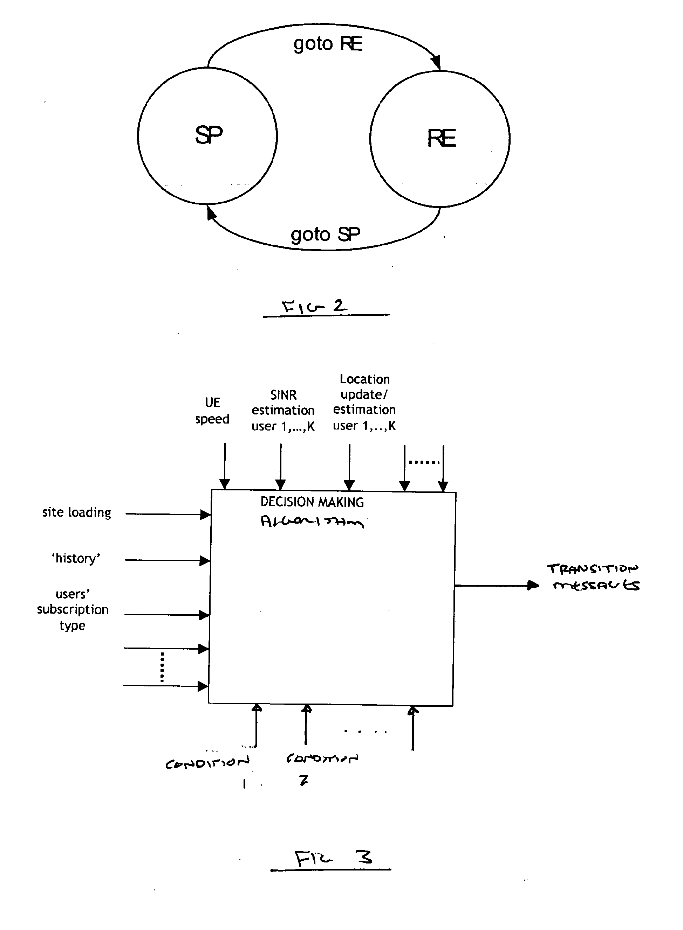

As shown in Figure 2, each small cell base station exists in one of the two following operating states. The first is the sleeping state in which all hardware components in the small cell base station are switched off, except for the wake on LAN circuit element, which is used to switch on the small cell base station upon receiving a wake up control message from the core network via the backhaul. As many of the hardware components of the small cell base station are switched off, the hardware boot up the time can be in the order of seconds or minutes. However, the energy consumption when in this state is minimal, with the wake on LAN circuit element being the only power-consuming element.

The second state is the ready or non-sleeping state in which all of the hardware components in the small cell base station are fully switched on and the small cell base station's air interface and pilot transmissions are activated.

As will be explained in more detail below, the small cell base station transitions between the sleeping and ready states in response to control messages received over the backhaul from the core network.

As shown in Figure 3, a centralised decision making algorithm is provided, typically as a software component within the MME 80. The algorithm determines whether to cause a transition in the operating state of each small cell base station between the sleeping and ready state based on particular network conditions to be achieved and based parameters received relating to the operation and configuration of network nodes within the network.

As can be seen from Figure 3, the type of parameters or characteristics utilised by the algorithm can be split into user equipment related parameters (such as speed, SINR estimation, location estimation, subscription type, etc.) and infrastructure-related parameters (such as cell load, handover parameters, site history, etc). These parameters may be routinely reported to the MME 80 or may be requested by the MME 80. For example, in LTE, RSRP or RSRQ measurements could be used to provide such an SINR estimation. The SINR estimation and other parameters may be from one or more user equipment. Utilising SINR estimation, the core network can measure the quality of service as perceived by the user equipment.

The decision-making algorithm also receives a number of predetermined conditions to be achieved. Each of the conditions may also have one or more thresholds associated therewith, in order to provide finer control over the operation of the network. Examples of such conditions which may be set include only waking up a small cell when the number of user equipment located close to that small cell is beyond a certain threshold. Likewise, a condition could be defined as the sum of the energy consumption of the macro cell and small cells. Based on this, a small cell could be activated only if it brings a reduction in the total energy consumption. For UE mobility, the algorithm could decide to activate a small cell base station to give connectivity only to users with low mobility. With UE subscription type, the core network could allow access to the small cells for user equipment only with a given subscription type. Alternatively, the core network could decide to activate small cell base stations only when users with a given subscription type which would require a high data rate service are present. For site loading, the small cell could be turned to the ready state only if the load on the underlying macro cell is beyond a given threshold. For history, small cell base stations may be activated at a particular time in a particular location based on historic loading in that location. For example, considering a market square in a town centre where people routinely gather between 10 am and 12 noon every day, the decision-making algorithm could activate small cells in that area at around 10 am without waiting for an increase in the parameters being reported. It will be appreciated that a wide range of conditions, and combinations of conditions may be specified and utilised by the decision making algorithm.

Based on the parameters and the condition to be achieved, the algorithm makes a decision on whether any small cells need to transition from their current state by evaluating an objective function related to the particular condition. This enables a tight control of the network, as a global metric can be considered in the objective function (such as total energy consumption, total throughput, or the like) taking into account the contributions coming from the different nodes of the heterogeneous cell deployment. It will be appreciated that the conditions that may be set and the parameters that may be utilised by the decision-making algorithm will vary enormously depending on implementations.

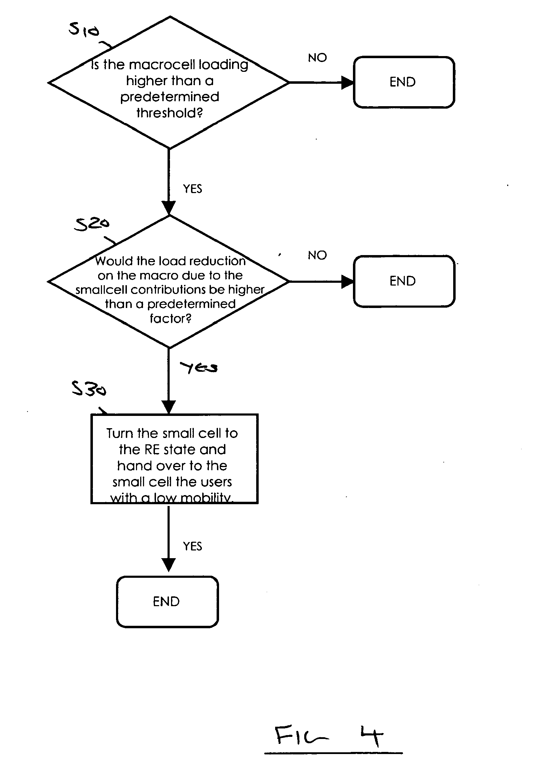

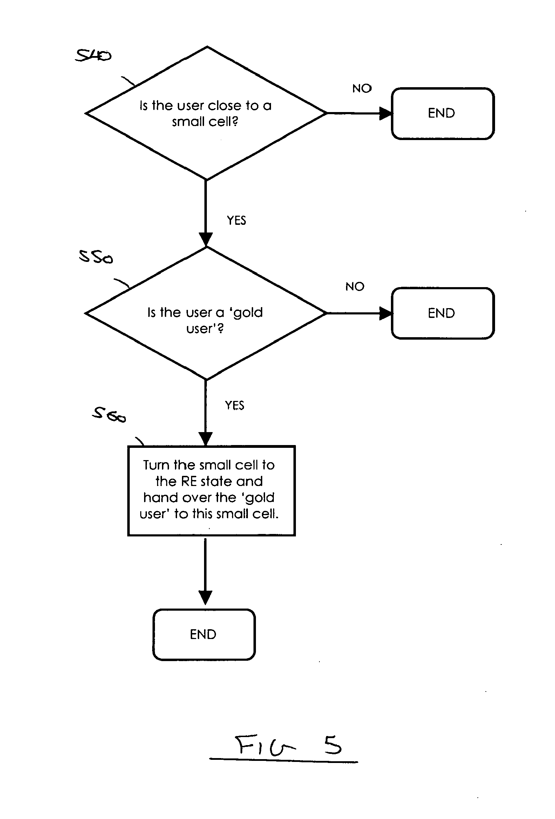

Two such examples will now follow with reference to Figures 4 and 5.

Figure 4 is a flowchart illustrating an example operation of the decision-making algorithm. In this example, the decision-making algorithm receives inputs detailing site loading and user mobility and receives a condition which specifies that a small cell base station should be switched out of the sleeping state to offload some traffic from the underlying macro cell when this reduces the load on a macro base station by greater than a particular amount.

At step S 10, an assessment is made of whether the macro cell loading reported by the infrastructure parameters is greater than a predetermined threshold specified by the desired operating condition. If the loading is less than the threshold then no action is taken.

However, if the loading is greater than a predetermined threshold, then at step S20 an assessment is made using the parameters being received on whether a load reduction on the macro due to the activation of the small cell would be greater than a particular factor also specified by the desired operating condition. If activating the small cell is deemed not to provide a particular improvement, then no further action is taken.

However, if switching on the small cell base station would provide greater than the required improvement, then at step S30 the small cell base station is activated. Those user equipment having a low mobility are then handed over to the small cell base station.

Figure 5 illustrates an example operation of the decision-making algorithm where an assessment is made based on the user subscription type.

In this example, the decision-making algorithm receives parameters relating to the user equipment and receives a condition which specifies that small cell base stations should be activated for particular user subscription types.

At step S40 an assessment is made from the received parameters of whether the user equipment is close to a small cell. If not, then no further action is taken.

However, if the user equipment is close to a small cell, then at step S50 an assessment is made of the user's service type. In this example, an assessment is made of whether the user is a "gold user", meaning that the user is entitled to a high quality of service. If the user does not meet this condition, then no further action is taken.

However, if the user is a gold user then, at step S60, the MME 80 instructs the small cell base station to activate the small cell using a transition message sent over the backhaul. The gold user is then handed over to the small cell.

Hence, in the overview, a centralised approach is provided which wakes up or forces to sleep a given small cell base station, based not only on particular user equipment but also taking into account other factors such as the macro cell traffic load, the user's subscription type and traffic behaviour, the type of service requested, the overall energy saving required, etc. Hence, the fact that a user equipment with the right to access a small cell is camped in the underlying macro cell or located close to the small cell may not be a sufficient condition to wake up the small cell base station. It will be appreciated that this approach is particularly advantageous for small cell base stations operating in the open access mode, since otherwise such small cell base stations may routinely be activated, even though their activation may not be required.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling an operating state of at least one small cell base station of a heterogeneous wireless telecommunications network, said operating state being one of a sleeping and a non-sleeping state, said at least one small cell base station providing wireless coverage, when in said non-sleeping state, within a wireless coverage area provided by another base station, said method comprising the steps of:
receiving at least one of user equipment parameters relating to operating characteristics of user equipment within said heterogeneous wireless telecommunications network and base station parameters relating to operating characteristics of base stations within said heterogeneous wireless telecommunications network; and
determining from said at least one of said user equipment parameters and said base station parameters whether a change is required to said operating state of said at least one small cell base station to achieve at least one predetermined operating condition of said heterogeneous wireless telecommunications network and, if so, transmitting said change to said at least one small cell base station to cause a transition between said sleeping and non-sleeping state.

2. The method of claim 1, comprising at least one of an upper and lower threshold related to said at least one predetermined operating condition and said step of determining comprises determining whether a change is required to said operating state of said at least one small cell base station to achieve said at least one of said upper and lower threshold related to said at least one predetermined operating condition.

3. The method of claim 1 or 2, comprising an upper and lower threshold related to said at least one predetermined operating condition and said step of determining comprises determining whether a change is required to said operating state of said at least one small cell base station to achieve said predetermined operating condition within said upper and lower threshold.

4. The method of any preceding claim, comprising a plurality of small cell base stations and said step of determining comprises determining whether a change is required to said operating state of each of said plurality of one small cell base stations to achieve said at least one predetermined operating condition of said heterogeneous wireless telecommunications network and, if so, transmitting said change to said plurality of one small cell base stations to cause a transition between said sleeping and non-sleeping state.

5. The method of any preceding claim, wherein said user equipment parameters comprise at least one of user equipment speed, user equipment location, user equipment signal to interference plus noise ratio, user equipment subscription type and user equipment service.

6. The method of any preceding claim, wherein said base station parameters comprise at least one of base station load, base station handover parameters, base station historic operating characteristics and base station energy consumption.

7. The method of any preceding claim, wherein said predetermined operating condition comprises at least one of network energy consumption, network throughput, base station activation level, mobility support level and quality of service support level.

8. The method of any preceding claim, wherein said another base station is operable to provide an overlying cell as said wireless coverage area within which said small cell base station is operable to provide a small cell as said wireless coverage.

9. The method of any preceding claim, wherein, when in said sleeping state, wireless communication logic of said small cell base station is unpowered and said small cell base station is inoperable to provide said wireless coverage.

10. The method of any preceding claim, wherein, when in said non-sleeping state, wireless communication logic of said small cell base station is powered and said small cell base station is operable to provide said wireless coverage.

11. A network node operable to control an operating state of at least one small cell base station of a heterogeneous wireless telecommunications network, said operating state being one of a sleeping and a non-sleeping state, said at least one small cell base station providing wireless coverage, when in said non-sleeping state, within a wireless coverage area provided by another base station, said network node comprising:
reception logic operable to receive at least one of user equipment parameters relating to operating characteristics of user equipment within said heterogeneous wireless telecommunications network and base station parameters relating to operating characteristics of base stations within said heterogeneous wireless telecommunications network; and
determination logic operable to determine from said at least one of said user equipment parameters and said base station parameters whether a change is required to said operating state of said at least one small cell base station to achieve at least one predetermined operating condition of said heterogeneous wireless telecommunications network; and
transmission logic operable, in response to an indication from said determination logic, to transmit said change to said at least one small cell base station to cause a transition between said sleeping and non-sleeping state.

12. A computer program product operable, when executed on a computer, to perform the method steps of any one of claims 1 to 11.
